# FASCICULE DE BREVET EUROPEEN

(11) **EP 2 308 118 B1**
(45) Date de publication et mention de la délivrance du brevet: **08.05.2013**
(21) Numéro de dépôt: 09740430.5
(22) Date de dépôt: 04.08.2009
(51) Int. Cl.: H01M 2/02, H01M 10/50, B60S 5/06, H01M 2/10, B60K 1/04, B60L 11/18

(54) **STRUCTURE DE SUPPORT DE BATTERIE POUR VEHICULE AUTOMOBILE**
KRAFTFAHRZEUGBATTERIE-UNTERSTÜTZUNGSSTRUKTUR
MOTOR VEHICLE BATTERY SUPPORTING STRUCTURE

(30) Priorité: 08.08.2008 FR 0855490
(43) Date de publication de la demande: 13.04.2011
(73) Titulaire: Renault s.a.s., 92100 Boulogne-Billancourt (FR)
(72) Inventeur: BANNIER, Nathalie, F-78860 Saint Nom La Breteche (FR); BEDDOCK, David, F-91300 Massy (FR)
(86) Numéro de dépôt international: PCT/FR2009/051549
(87) Numéro de publication internationale: WO 2010/015777

(56) Documents cités:
- EP-A- 1 441 401
- JP-A- 8 067 151
- JP-A- 9 274 899
- US-A- 5 853 058
- US-A- 6 040 080
- US-A1- 2003 047 364
- US-B1- 6 227 322

## Description

La présente invention concerne une structure de support de batterie pour véhicule automobile.

Il est connu, et notamment dans le document WO 2007049127, des moyens de fixation de batteries dans des véhicules électriques. Ces batteries, assemblages de « stacks », présentent la forme d'un boitier, solidarisé à des longerons du véhicule, par l'intermédiaire de moyens intermédiaires de fixation.

Classiquement, ces batteries sont disposées dans le bloc avant du véhicule, à distance de l'extrémité frontal pour préserver la batterie d'une éventuelle déformation de la structure lors d'un choc. Elles peuvent également être disposées sous le véhicule, et être ainsi protégées d'un impact frontal ou arrière. Dans le cas d'une batterie devant être disposée à proximité d'une extrémité longitudinale du véhicule, et par exemple lorsqu'une batterie est disposée à l'arrière du véhicule, il convient de prendre particulièrement en compte l'environnement support de cette batterie, afin d'éviter qu'un choc sur le véhicule puisse détériorer cette batterie, et par la suite présenter un danger pour l'utilisateur.

Le document JP 08 067 151 A présente des moyens alternatifs de fixation de batteries dans des véhicules électriques.

Un des objectifs de l'invention est donc de proposer une structure de support de batterie pour véhicule automobile permettant de protéger la batterie des chocs subis par le véhicule. A cet objectif s'ajoute celui de présenter une structure de support permettant une manipulation aisée et rapide de la batterie associée, notamment dans un esprit d'interchangeabilité des batteries sur une même structure de support. Ainsi la structure support batterie est amenée à accueillir les fonctions rendant possible cette interchangeabilité comme le verrouillage, la connectique, l'étanchéité de la batterie par rapport au véhicule.

En réponse à des objectifs que l'on retrouve invariablement chez les différents constructeurs automobiles, la présente invention se veut également peu coûteuse et peu encombrante.

Pour répondre à ces objectifs, l'invention propose une structure de support de batterie d'un véhicule automobile, apte d'une part à être rapportée et solidarisée sur la structure de caisse de ce véhicule, et d'autre part à porter une batterie, caractérisée en ce que cette structure de support présente la forme d'un cadre apte à entourer la batterie, le cadre présentant en son centre une ouverture apte à permettre la mise en place de la batterie, et caractérisé en ce que des premiers moyens de verrouillage de la batterie sont portés par le cadre, de manière à permettre le verrouillage et le déverrouillage de la batterie sur ce cadre.

L'invention est plus précisément définie par les revendications.

D'autres caractéristiques et avantages de l'invention apparaîtront à la lecture de la description détaillée qui suit pour la compréhension de laquelle on se reportera aux dessins annexés dans lesquels :
- la figure 1 est une vue de dessous d'un soubassement arrière de véhicule, muni d'une structure de support de batterie selon l'invention ;
- la figure 2 est une vue de la structure de support de batterie de la figure 1, et de la batterie associé ;
- la figure 2a est un agrandissement de la figure 2, montrant spécifiquement un moyen d'indexage de la batterie dans la structure de support selon l'invention ;
- la figure 3 est un schéma de l'ensemble formé dans le véhicule par une batterie et une structure de support selon l'invention, vues de dessous du véhicule ;
- la figure 4 est une représentation du cadre formant la structure de support de batterie selon l'invention, vu de dessus ;
- la figure 5 est une vue de côté de la structure de support de batterie de la figure 1, et de la batterie associé ;
- la figure 6 est une vue de dessus du carénage solidaire de la batterie selon l'invention ;
- la figure 7 est une vue de dessous du soubassement du véhicule permettant de localiser l'emplacement des vues en coupe montrant plus spécifiquement les accostages de la structure de support avec la caisse du véhicule.

Tel que représenté sur les figures, une structure de support de batterie est rapportée et solidarisée sur la structure de caisse 4 du véhicule, et présente une forme de cadre 10 dont la forme et les dimensions sont aptes à permettre la fixation de ce cadre 10 d'une part sur les longerons 44, 46, et d'autre part sur des traverses 41, 42 formant des éléments de structures du véhicule sensiblement perpendiculaires aux longerons. Ainsi, de façon générale, le cadre 10 s'étend sensiblement horizontalement et transversalement entre le longeron gauche et le longeron droit, avant ou arrière selon le lieu d'implantation de la batterie, respectivement dans le bloc avant ou dans le bloc arrière du véhicule.

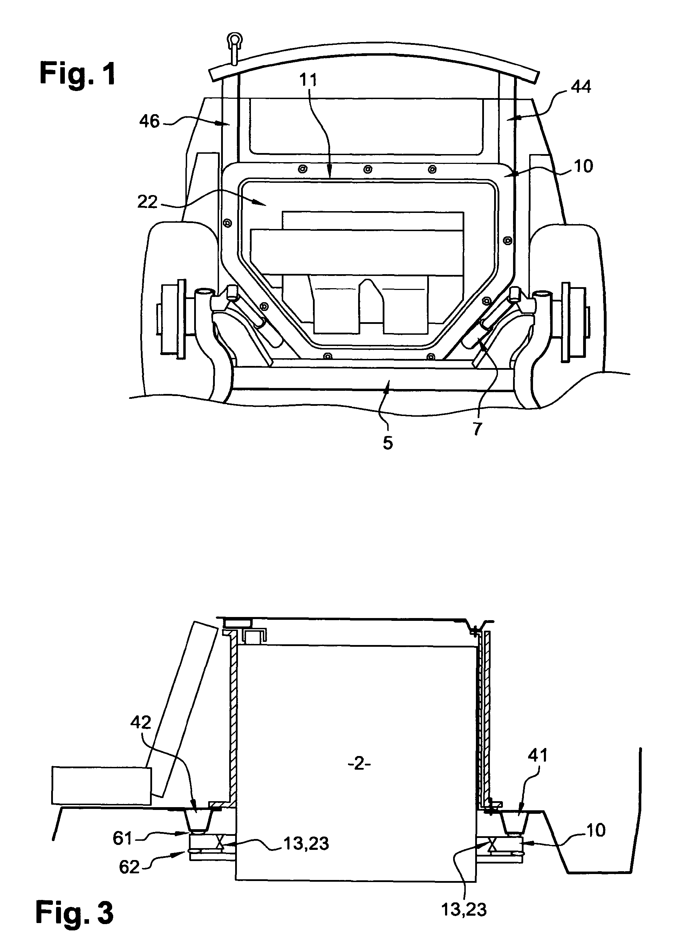

Selon l'exemple représenté à la figure 1, relativement à l'implantation d'une batterie 2 et d'une structure de support selon l'invention dans un bloc arrière de véhicule, le cadre 10 formant cette structure de support est rapporté et vissé sous les longerons arrière gauche et droit 44, 46, sous une traverse arrière spécifique 41, et sous une traverse centrale de soubassement 42. Cette implantation est faite en tenant compte de l'architecture du train arrière, représenté notamment par une traverse de train arrière 5 et des amortisseurs 7 disposés entre la caisse et les supports de roue.

Le cadre 10 présente en son centre une ouverture apte à permettre la mise en place d'une batterie 2, cette batterie étant apte à coopérer avec le cadre 10 pour assurer le verrouillage de la batterie 2 en position par rapport au cadre 10, et ainsi par rapport à la structure de caisse 4. Selon le schéma de la figure 3, l'empilement de ces composantes est le suivant, à savoir de haut en bas, une structure de caisse 4 du véhicule, un cadre 10 solidarisé à cette structure de caisse 4, avec des premiers moyens d'étanchéité 61 disposés entre la caisse 4 et le cadre 10, et enfin une batterie 2 verrouillée sous le cadre 10, des seconds moyens d'étanchéité 62 étant disposés entre la batterie 2 et le cadre 10.

Des premiers moyens de verrouillage 13 sont portés par le cadre 10, et présentent une forme complémentaire avec des seconds moyens de verrouillage 23 solidaires de la batterie 2. La coopération de ces premiers et seconds moyens de verrouillage permet la fixation de la batterie 2 par rapport au cadre 10 de support, lorsque la batterie est dans la position souhaitée par l'opérateur.

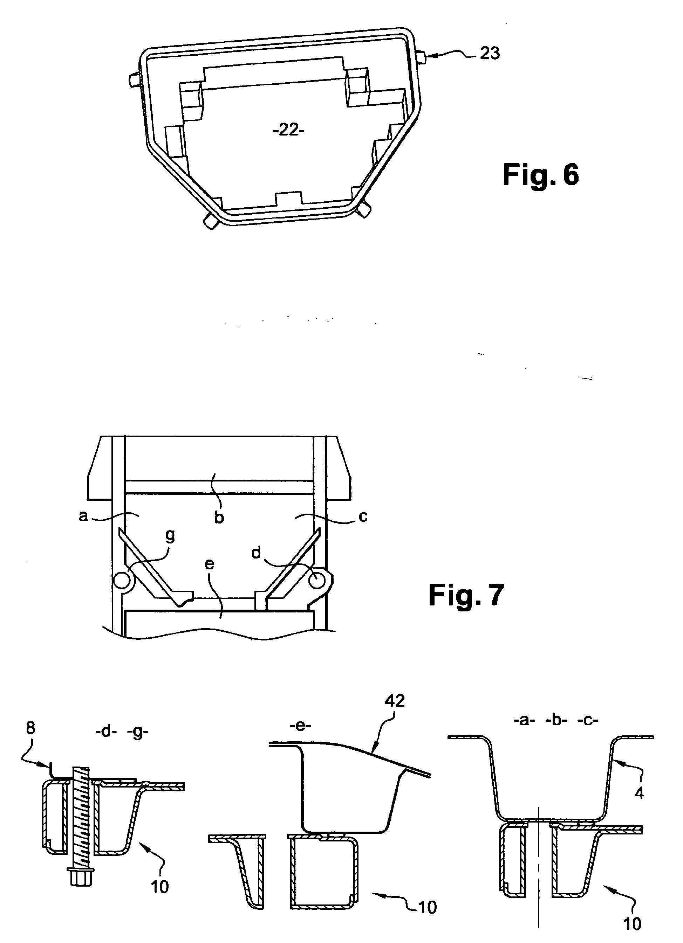

Tel que représenté, ces premiers moyens de verrouillage 13 peuvent présenter la forme de crochets ou de serrure, destinés à crocheter des pattes de verrouillage ou de gâche répartis sur le pourtour de la batterie et formant les seconds moyens de verrouillage 23. Il sera compris que la batterie 2 peut être entourée et portée par un carénage 22, représenté à titre d'exemple à la figure 6, et que c'est sur ce carénage 22 que peuvent notamment être formées les seconds moyens de verrouillage 23 évoquées ci-dessus. Ce carénage 22 peut être formé en aluminium, et pourra présenter des caractéristiques thermiques particulières dues au portage de la batterie 2.

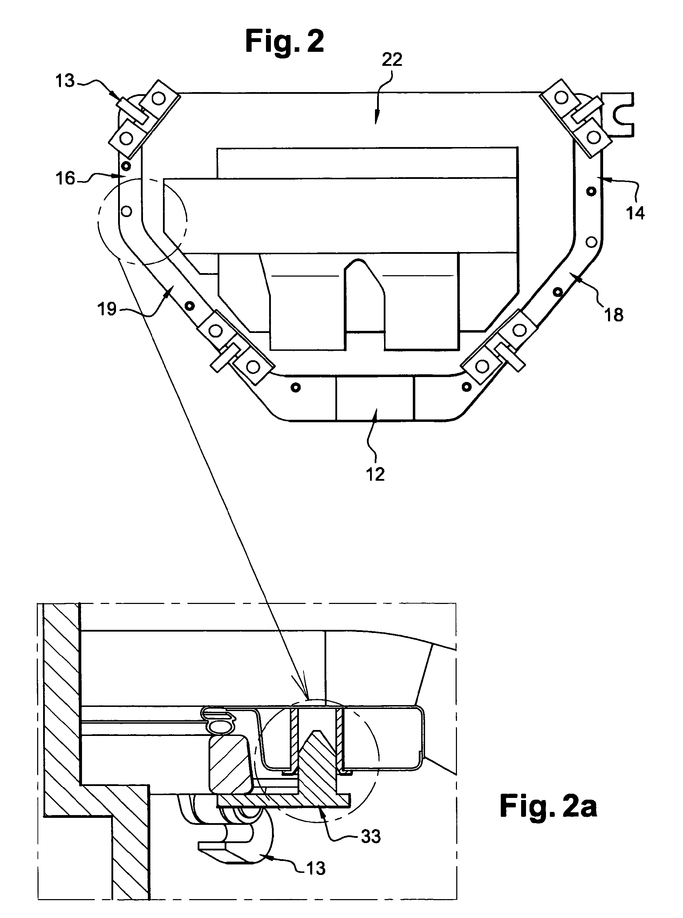

La précision de l'assemblage entre la batterie 2 et le cadre support 10 est faite par un positionnement de la batterie prenant référence sur les pilotes et des anneaux intégrés au cadre, et par des moyens d'indexage, représentés à la figure 2a, et réalisés sous forme de pions d'indexage 33 intégrés à la batterie qui viennent se piloter dans des trous aménagés dans la face inférieure du cadre 10. Ces pions d'indexage 33 assurent également un arrêt en translation longitudinalement et transversalement lors des chocs.

La précision de l'assemblage entre le cadre support 10 et la structure de caisse 4 est faite par des pions de pilotage 35 disposés sur la face supérieure du cadre 10, et aptes à coopérer avec des aménagements de la structure de caisse.

Ces pions d'indexage et de pilotage remplissant également une fonction anti-burst par un arrêt en translation longitudinal et transversal lors des chocs, d'une part du cadre 10 par rapport à la structure de caisse 4, et d'autre part de la batterie 2 par rapport au cadre 10.

Il sera compris que l'emplacement des moyens de verrouillage 13, 23 et des moyens d'indexage 33 sur le cadre 10 est calculé pour un maintien optimisé de la batterie 2 par rapport au cadre 10. Le fait d'avoir quatre moyens de verrouillage disposés sur le pourtour du cadre 10 permet un maintien fort de la batterie et du carénage 22 associé. Toutefois, sans sortir du contexte de l'invention, ce nombre de moyens de verrouillage pourrait être distinct et leur emplacement en serait modifié. Dans tous ces cas, les moyens de verrouillage sont dimensionnés pour tenir la tension lors d'efforts générés par les mouvements de la batterie 2 relativement au cadre support 10, sous l'effet d'une brutale décélération notamment lors des chocs.

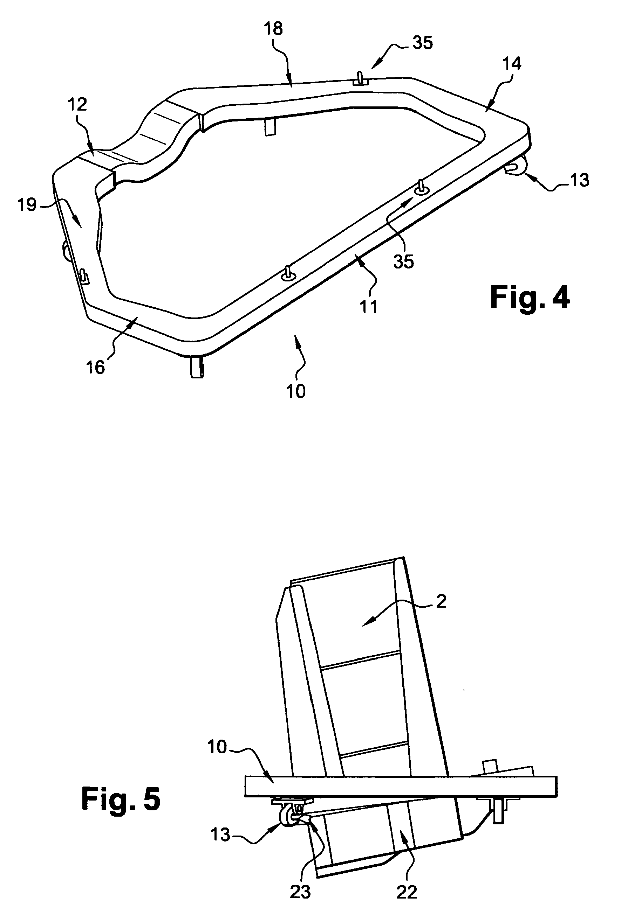

Le positionnement de la batterie 2 par rapport au cadre 10 est tel que cette batterie est complètement entourée par le cadre 10, et s'étend verticalement aussi bien au dessus du cadre 10 qu'en dessous. L'architecture du véhicule impose sur les figures que la batterie 2 est située essentiellement au dessus de ce cadre 10, mais ce cadre 10 est suffisamment haut pour que le basculement de la batterie lors d'un choc par rapport au cadre 10 et à la caisse du véhicule associé soit contrôlé, tel que représenté à la figure 5.

Le cadre 10 est formé d'un corps creux dimensionné par rapport au mode d'excitation pour la prestation acoustique et endurance, ce corps creux pouvant être réalisé en mono pièce par fonderie, ou en multi pièces par emboutissage par exemple, que ce soit en aluminium ou en acier.

Tel que représenté notamment à la figure 4, le cadre 10 présente une partie arrière sensiblement rectangulaire et formée d'un premier élément transversal 11, apte à être disposé sous la traverse arrière 41 de structure du véhicule, et de deux éléments latéraux 14, 16 sensiblement perpendiculaires au premier élément transversal 11, aptes à être disposés sous les longerons 44, 46 du véhicule. Le cadre 10 présente en outre une partie avant, prolongeant sensiblement dans le même plan la partie arrière, en forme de trapèze avec un deuxième élément transversal 12 formant la petite base sensiblement parallèle au premier élément transversal 11, ce deuxième élément transversal 12 étant apte à être disposé sous la traverse centrale 42 de structure du véhicule. Ce deuxième élément transversal 12 est raccordé aux éléments latéraux 14, 16 de la partie arrière du cadre 10 par des éléments obliques 18, 19 aptes à être disposés sous les chapes amortisseurs.

Le cadre 10 présente la forme d'un corps creux sensiblement plan et horizontal, à l'exception du deuxième élément transversal qui présente une ondulation, cet aménagement étant réalisé pour positionner la bague d'étanchéité de passage des câbles haute et basse tension du sous caisse vers une zone étanche du véhicule. Toutefois, le cadre est globalement sensiblement plan. De plus, il entoure complètement la batterie, parcourt tout son pourtour au niveau de ses parois latérales, de sorte qu'une partie de la batterie dépasse au-dessus et au-dessous du cadre, ou est apte à un tel dépassement en cas de choc, comme illustré par la figure 5. Les moyens de verrouillage respectifs de la batterie et du cadre sont ainsi situés à une hauteur intermédiaire de la hauteur de la batterie.

La présence du cadre 10 permet d'envisager de rapporter sur ce cadre 10 des éléments annexes à la batterie, et notamment une éventuelle cloche de protection rapportée sur le cadre 10. Cette cloche de protection permet de gérer l'étanchéité au bruit et aux salissures, et permet en outre une isolation du champ magnétique crée par la batterie. La cloche de protection est ainsi soudée au cadre 10 et s'étend au dessus du cadre 10, permettant toujours le montage de la batterie 2 à travers le cadre 10, par le dessous de celui-ci.

La structure de support de batterie selon l'invention présente ainsi l'avantage combiné d'automatiser le remplacement des batteries, tout en assurant une protection de la batterie, ainsi qu'une rigidification de la structure générale de la caisse. L'automatisation du remplacement des batteries est rendu possible par la mise en référentiel du véhicule lors d'un échange de la batterie par l'indexage de cette batterie sur le cadre solidaire de la caisse.

## Revendications

1. Structure de support de batterie d'un véhicule automobile, ladite structure étant, d'une part, rapportée et solidarisée sur la structure de caisse (4) de ce véhicule et, d'autre part, portant une batterie (2), **caractérisée en ce que** cette structure de support présente la forme d'un cadre (10) horizontal entourant complètement la batterie (2) au niveau de ses parois latérales, le cadre (10) présentant en son centre une ouverture pour la mise en place de la batterie (2), laquelle s'étendant verticalement aussi bien au-dessus qu'en dessous du cadre, et **caractérisée en ce que** des premiers moyens de verrouillage (13) de la batterie sont portés par le cadre (10), de manière à permettre le verrouillage et le déverrouillage de la batterie (2) sur ce cadre (10).

2. Structure de support de batterie selon la revendication 1, **caractérisée en ce que** le cadre (10) présente une partie arrière rectangulaire et formée d'un premier élément transversal (11) et de deux éléments latéraux (14, 16) perpendiculaires au premier élément transversal (11), **en ce que** le cadre (10) présente en outre une partie avant, prolongeant dans le même plan la partie arrière, et comportant un deuxième élément transversal (12) parallèle au premier élément transversal (11), ce deuxième élément transversal (12) présentant une longueur inférieure à celle du premier élément transversal (11), et étant raccordé aux éléments latéraux (14, 16) de la partie arrière du cadre (10) par des éléments obliques (18, 19).

3. Structure de support de batterie selon la revendication 2, **caractérisée en ce que** le cadre (10) présente la forme d'un corps creux horizontal, le deuxième élément transversal (12) présentant une ondulation, permettant le positionnement d'une bague d'étanchéité de passage de câbles.

4. Structure de support de batterie selon l'une des revendications 1 à 3, **caractérisée en ce que** des pions de pilotage (35) sont portés par une face du cadre (10), et coopèrent avec des aménagements de la structure de caisse (4) du véhicule.

5. Structure de support de batterie selon l'une des revendications 1 à 4, **caractérisée en ce que** des trous d'indexages sont aménagés sur une face du cadre (10), et coopèrent avec des pions d'indexages (33) portés par la batterie (2).

6. Agencement de support de batterie, du type comprenant une batterie (2) supportée par une structure de support selon l'une des revendications précédentes, **caractérisé en ce que** des seconds moyens de verrouillage (23) sont solidaires de la batterie (2) et coopèrent avec les premiers moyens de verrouillage (13) portés par le cadre (10).

7. Agencement de support selon la revendication précédente, **caractérisé en ce que** la batterie (2) est entourée et portée par un carénage (22), et **en ce que** les seconds moyens de verrouillage (23) sont formés sur ce carénage (22).

8. Véhicule automobile, du type comprenant une batterie (2) supportée par une structure de support selon l'une des revendications 1 à 5, **caractérisé en ce que** la forme et les dimensions du cadre (10) sont telles qu'elles permettent la fixation de ce cadre (10) d'une part sous les longerons (44, 46) du véhicule et d'autre part sous des traverses (41, 42) formant des éléments de structures du véhicule perpendiculaires aux longerons.

9. Véhicule automobile selon la revendication 8, **caractérisé en ce que** le cadre (10) est solidarisé à la structure de caisse (4), des premiers moyens d'étanchéité (61) étant disposés entre la caisse (4) et le cadre (10), et **en ce qu'**une batterie (2) est verrouillée sous le cadre (10), des seconds moyens d'étanchéité (62) étant disposés entre la batterie (2) et le cadre (10).

## Patentansprüche

1. Batterieträgeraufbau eines Kraftfahrzeugs, wobei der Aufbau einerseits auf die Karosseriestruktur (4) dieses Fahrzeugs aufgesetzt und fest damit verbunden ist und andererseits eine Batterie (2) trägt, **dadurch gekennzeichnet, dass** dieser Trägeraufbau die Form eines waagerechten Rahmens (10) hat, der die Batterie (2) im Bereich ihrer Seitenwände vollständig umgibt, wobei der Rahmen (10) in seiner Mitte eine Öffnung zum Einsetzen der Batterie (2) aufweiset, die sich senkrecht sowohl über als auch unter dem Rahmen erstreckt, und **dadurch gekennzeichnet, dass** erste Verriegelungseinrichtungen (13) der Batterie vom Rahmen (10) getragen werden, um das Verriegeln und das Entriegeln der Batterie (2) auf diesem Rahmen (10) zu erlauben.

2. Batterieträgeraufbau nach Anspruch 1, **dadurch gekennzeichnet, dass** der Rahmen (10) einen rechtwinkeligen hinteren Teil aufweist, der von einem ersten Querelement (11) und von zwei zum ersten Querelement (11) lotrechten Seitenelementen (14, 16) geformt wird, dass der Rahmen (10) außerdem einen vorderen Teil aufweiset, der in der gleichen Ebene den hinteren Teil verlängert und ein zweites Querelement (12) parallel zum ersten Querelement (11) aufweist, wobei dieses zweite Querelement (12) eine geringere Länge als die des ersten Querelements (11) aufweist und mit den Seitenelementen (14, 16) des hinteren Teils des Rahmens (10) durch schräge Elemente (18, 19) verbunden ist.

3. Batterieträgeraufbau nach Anspruch 2, **dadurch gekennzeichnet, dass** der Rahmen (10) die Form eines waagerechten Hohlkörpers aufweiset, wobei das zweite Querelement (12) eine Wellenform aufweiset, die die Positionierung eines Dichtrings für den Durchgang von Kabeln erlaubt.

4. Batterieträgeraufbau nach einem der Ansprüche 1 bis 3, **dadurch gekennzeichnet, dass** Steuerzapfen (35) von einer Seite des Rahmens (10) getragen werden und mit Ausbildungen der Karosseriestruktur (4) des Fahrzeugs zusammenwirken.

5. Batterieträgeraufbau nach einem der Ansprüche 1 bis 4, **dadurch gekennzeichnet, dass** Indexierlöcher auf einer Seite des Rahmens (10) angeordnet sind und mit von der Batterie (2) getragenen Indexierzapfen (33) zusammenwirken.

6. Batterieträgeranordnung von der Art, die eine von einem Trägeraufbau nach einem der vorhergehenden Ansprüche getragene Batterie (2) enthält, **dadurch gekennzeichnet, dass** zweite Verriegelungseinrichtungen (23) fest mit der Batterie (2) verbunden sind und mit den vom Rahmen (10) getragenen ersten Verriegelungseinrichtungen (13) zusamnenwirken.

7. Trägeranordnung nach dem vorhergehenden Anspruch, **dadurch gekennzeichnet, dass** die Batterie (2) von einer Verkleidung (22) umgeben und getragen wird, und dass die zweiten Verriegelungseinrichtungen (23) auf dieser Verkleidung (22) geformt sind.

8. Kraftfahrzeug von der Art, die eine von einem Trägeraufbau nach einem der Ansprüche 1 bis 5 getragene Batterie (2) enthält, **dadurch gekennzeichnet, dass** die Form und die Abmessungen des Rahmens(10) derart sind, dass sie die Befestigung dieses Rahmens (10) einerseits unter den Längsträgern (44, 46) des Fahrzeugs und andererseits unter Querträgern (41, 42) erlauben, die Strukturelemente des Fahrzeugs lotrecht zu den Längsträgern formen.

9. Kraftfahrzeug nach Anspruch 8, **dadurch gekennzeichnet, dass** der Rahmen (10) fest mit der Karosseriestruktur (4) verbunden ist, wobei erste Dichtungseinrichtungen (61) zwischen der Karosserie (4) und dem Rahmen (10) ungeordnet sind, und dass eine Batterie (2) unter dem Rahmen (10) verriegelt ist, wobei zweite Dichtungseinrichtungen (62) zwischen der Batterie (2) und dem Rahmen (10) angeordnet sind.

## Claims

1. Motor vehicle battery supporting structure, said structure firstly being attached and secured to the bodyshell structure (4) of this vehicle and secondly carrying a battery (2), **characterized in that** this supporting structure has the form of a horizontal planar frame (10) a completely surrounding the battery (2) in the region of its side walls, the frame (10) having in its center an opening for fitting the buttery (2), said battery extending vertically both above and below the frame, and **characterized in that** first battery locking means (13) are carried on the frame (10) such that the battery (2) can be locked and unlocked on this frame (10).

2. Battery supporting structure according to Claim 1, **characterized in that** the frame (10) has a rectangular rear part formed from a first transverse element (11) and two lateral elements (14, 16) perpendicular to the first transverse element (11), **in that** the frame (10) further has a front part, extending the rear part in the same plane, and having a second transverse element (12) parallel to the first transverse element (11), this second transverse element (12) being shorter than the first transverse element (11), and being connected to the lateral elements (14, 16) of the rear part of the frame (10) by oblique elements (18, 19).

3. Battery supporting structure according to Claim 2, **characterized in that** the frame (10) has the form of a horizontal, hollow body, the second transverse element (12) having a wave form for positioning a sealing ring for cables to pass through.

4. Battery supporting structure according to one of Claims 1 to 3, **characterized in that** guide pins (35) are carried on one face of the frame (10) and engage with formations on the bodyshell structure (4) of the vehicle.

5. Battery supporting structure according to one of Claims 1 to 4, **characterized in that** indexing holes are formed on one face of the frame (10) and engage with indexing pins (33) carried on the battery (2).

6. Battery supporting arrangement of the type comprising a battery (2) supported by a supporting structure according to one of the preceding claims, **characterized in that** second locking means (23) are secured to the battery (2) and engage with the first locking means (13) carried on the frame (10).

7. Supporting arrangement according to the preceding claim, **characterized in that** the battery (2) is surrounded and carried by a fairing (22), and **in that** the second locking means (23) are formed on this fairing (22).

8. Motor vehicle of the type comprising a battery (2) supported by a supporting structure according to one of Claims 1 to 5, **characterized in that** the form and dimensions of the frame (10) of the supporting structure are such that they fix this frame (10) firstly under the side members (44, 46) of the vehicle and secondly under cross members (41, 42) forming structural elements of the vehicle that are perpendicular to the side members.

9. Motor vehicle according to Claim 8, **characterized in that** the frame (10) is secured to the bodyshell structure (4), first sealing means (61) being located between the bodyshell (4) and the frame (10), and **in that** a Battery (2) is locked under the frame (10), second sealing means (62) being located between the battery (2) and the frame (10).
